# EUROPÄISCHE PATENTANMELDUNG

(11) **EP 0 591 889 A1**
(43) Veröffentlichungstag der Anmeldung: **13.04.1994**
(21) Anmeldenummer: 93115981.8
(22) Anmeldetag: 04.10.1993
(51) Int. Cl.: B65G 67/60, B65G 21/14, B65G 67/08

(54) **Förderanlage mit einem teleskopierbaren Bandförderer**

(30) Priorität: 07.10.1992 DE 4233754
(71) Anmelder: PWH Anlagen + Systeme GmbH, D-66386 St. Ingbert-Rohrbach (DE)
(72) Erfinder: Steckel, Horst, D-66386 St. Ingbert-Rohrbach (DE); Stenger, Erich, D-66583 Spiesen-Elversberg (DE)

(57) **Zusammenfassung**

Die Erfindung befaßt sich mit einer Förderanlage, die aus einem Vertikalförderer als Hauptförderer und einem Endförderer, nämlich einem im Übergabebereich (5) des Hauptförderers horizontal und vertikal verschwenkbaren, einseitig gelagerten, hydraulisch teleskopierbaren Bandförderer (1) mit mehreren Teleskopschüssen (2,3,4) besteht, wobei der Bandförderer (1) derart angeschlossen ist, daß der Bandförderer (1) in einer vertikalen Schwenkstellung und mit eingefahrenen Teleskopschüssen (2-4) einen kleinen spitzen Winkel zur Vertikalachse (43) des Vertikalförderers (6) hat und weitgehend innerhalb der äußeren Abmessungen des Vertikalförderers (6) liegt.

## Beschreibung

Die Erfindung betrifft eine Förderanlage, die aus einem Hauptförderer und einem Endförderer, nämlich einem im Übergabebereich des Hauptförderers horizontal und vertikal verschwenkbaren, einseitig gelagerten, teleskopierbaren Bandförderer mit mehreren Teleskopschüssen besteht, wobei der Bandförderer ein endloses um mehrere Umlenkrollen geführtes Förderband, eine glatte, unten verstärkte Auflagefläche für den Tragabschnitt des Förderbandes sowie querversteifende Verbände, an denen die als Hydraulikzylinder ausgebildeten Antriebsaggregate angreifen, auf der vom Tragabschnitt des Förderbandes abgewandten Seite der Teleskopschüsse aufweist.

Eine solche Förderanlage ist durch die DD-PS 81613 bekannt. Bei der bekannten Förderanlage schließt sich an einen als Bandförderer ausgebildeten Hauptförderer ein ebenfalls als Bandförderer ausgebildeter Endförderer an, die zusammen einen Stückgutverladeförderer bilden. Der Endförderer ist hydraulisch teleskopierbar.

Die DE-PS 3340322 zeigt einen anderen mit Zugmitteln ausziehbaren Stetigförderer mit mehreren Schüssen, der zwar in der Lage ist, die einzelnen Teleskopschüsse aus einem Rahmen auszufahren, doch läßt der hierfür vorgesehene Antrieb eine größere Erstreckung in horizontaler Richtung kaum zu. Darüber hinaus ist dieser Stetigförderer nicht in Einsatz mit einem Vertikalförderer bringbar.

Demgegenüber ist bei einer Schiffsentladeanlage nach DE-OS 4121996 ein im Übergabebereich vertikaler Hauptförderer zur Schüttgutentladung mit einem ebenfalls vertikalen, seitlich angesetzten Endförderer kombiniert, wobei die Entladeluke natürlich weit genug sein muß, um die Gesamtanordnung einführen zu können.

Aufgabe der Erfindung ist es, eine Förderanlage für ein Be- und Entladen aus einem tiefliegenden Laderaum zu schaffen, bei der der einseitig am Hauptförderer gelagerte teleskopierbare Bandförderer einfach im Aufbau ist und mit welchem eine verhältnismäßig große Ausladung realisiert werden kann und der ohne weiteres mit dem Haupförderer in eine Ladeluke abgesenkt werden kann. Für den Betrieb soll die Möglichkeit geschaffen sein, die in dem System bei Materialaufgabe in ausgefahrenem Zustand auftretenden Kräfte zu verringern.

Die Aufgabe wird dadurch gelöst, daß der Hauptförderer ein Vertikalförderer ist, an den der Bandförderer derart angeschlossen ist, daß der Bandförderer in einer vertikalen Schwenkstellung und mit eingefahrenen Teleskopschüssen einen kleinen spitzen Winkel zur Vertikalachse des Vertikalförderers hat und weitgehend innerhalb der äußeren Abmessungen des Vertikalförderers liegt.

Sind die Teleskopschüsse eingefahren, so kann der die ausfahrbaren Teleskopschüsse in sich aufnehmende innere Teleskopschuß mittels des zugeordneten 2-stufigen Hydraulikzylinders so weit abgeschwenkt werden, daß der Bandförderer in dieser Position etwa im Bereich der äußeren Abmessungen des Vertikalförderers liegt und mit diesem zusammen in eine für den Vertikalförderer geeignete Schiffsluke abgesenkt werden. Im vertikal ausgefahrenen Zustand sorgt die Kombination des Vertikalförderers mit dem in steifer Rahmenkonstruktion ausgebildeten Bandförderer und der durch die Hydraulikzylinder gegebenen Steifigkeit für eine hohe Stabilität unter Fördergutbelastung auch bei größter Ausladung.

Auf Ausgestaltungen der Erfindung gemäß den Unteransprüchen wird verwiesen. So ist weiterhin vorteilhaft, daß die Teleskopschüsse aus abgekanteten Blechelementen bestehen, wodurch mit einfachen Mitteln eine hohe Steifigkeit erreicht wird.

Für den Fördergurt soll die glatte, unten verstärkte Auflage aus einem Glattblech mit querverlaufenden Verstärkungen bestehen, wodurch die Förderlast sicher in den tragenden Rahmen geleitet wird.

Es ist weiterhin vorgesehen, daß das tragseitig gummierte Förderband auf der Laufseite eine Textilschicht aufweist.

Die Kastenkonstruktion des Bandförderers erlaubt es im übrigen dafür zu sorgen, daß auch bei einer Leckage der gummierte Fördergurt nicht angegriffen wird, indem die Schlauchanschlüsse für die Hydraulikzylinder der Teleskopschüsse jeweils seitlich neben diesen angeordnet werden.

Zum vertikalen Schwenken des Bandförderers greift an dem nicht teleskopierbaren Teleskopschuß mindestens ein 2-stufiger Hebe- und Senkzylinder an, der an Bauteilen des Vertikalförderers gelagert ist und der in seiner Arbeitshydraulik ein Dämpfungselement hat. Dieses Dämpfungselement kann eine Stickstoffblase oder eine Stickstoffflasche sein.

Die Erfindung ist anhand einer Zeichnung dargestellt und wird wie folgt beschrieben. Es zeigen:
- Fig. 1: Teildarstellung eines Vertikalförderers mit unten angelenktem teleskopierbarem Bandförderer in verschiedenen Stellungen
- Fig. 2: Querschnitt durch den Rahmen des Bandförderers

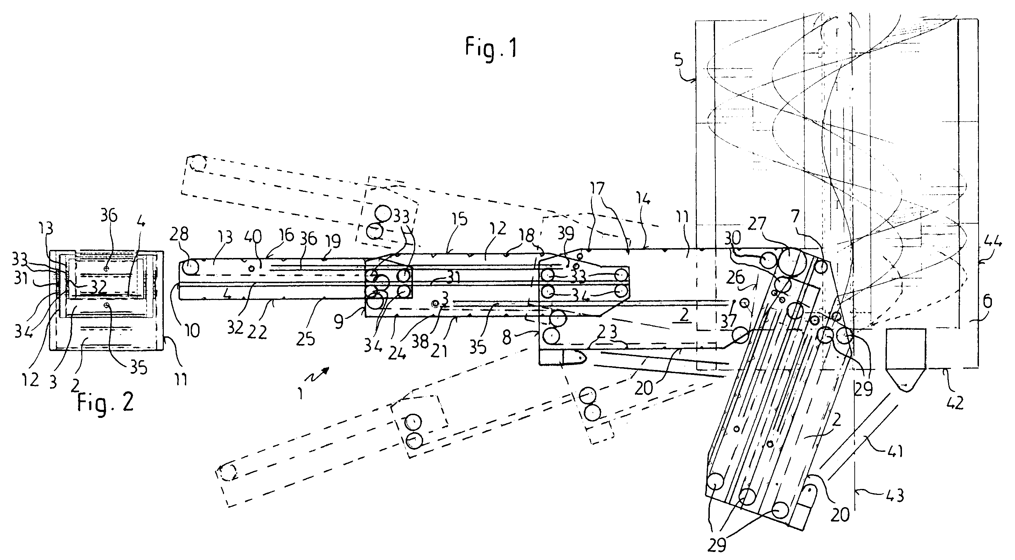

Fig. 1 zeigt den erfindungsgemäßen teleskopierbaren Bandförderer 1 sowohl in eingefahrener als auch in ausgefahrener Position. Erkennbar sind drei Teleskopschüsse 2,3,4, wobei der Teleskopschuß 2 stationär im unteren Bereich 5 eines nur angedeuteten Vertikalförderers 6 einseitig gelagert und um eine horizontale Schwenkachse 7 beweglich ist. Der Vertikalförderer 6 ist der Hauptförderer, der Bandförderer 1 der Endförderer. Der Bereich 5 des Vertikalförderers 6 ist entweder Aufnahmebereich oder Abgabebereich je nach der umschaltbaren Förderrichtung der Förderanlage.

Jeder Teleskopschuß 2,3,4 besteht aus einem Rahmen 8,9,10, der aus seitlich gekanteten Blechen 11,12,13 besteht und der im Bereich seines Obergurtes kassettenförmig ausgebildet ist. Die Kassetten bestehen aus Glattblechen 14,15,16, die mit entsprechenden quer verlaufenden Verstärkungen 17,18,19 versehen sind. Der Untergurt besteht jeweils aus einem Verband 20,21,22, der in analoger Weise Querversteifungen 23,24,25 aufweist.

Der hier lediglich angedeutete Fördergurt 26 ist in den Endbereichen des Bandförderers 1 um jeweils eine Umlenkrolle 27,28 führbar und im Bereich der Rahmen 2,3,4 im Bereich einer Vielzahl von Rollen 29 eingeschert. Zur Erhöhung des Umschlingungswinkels im Bereich der Umlenkrolle 27, die auch den hier nicht weiter dargestellten, als Trommelmotor ausgebildeten Antrieb aufnimmt, wird der Fördergurt 26 etwa auf Höhe der Umlenkrolle 27 um eine weitere Rolle 30 geführt, ehe er der nächsten Rolle 29 zugeführt wird.

Im Bereich der seitlichen Bleche 11,12,13 sind Schienenprofile 31,32 vorgesehen, die zur Führung oberer und unterer Laufrollen 33,34 dienen.

Zum Ein- und Ausfahren der einzelnen Teleskopschüsse 3,4 sind 2-stufige Hydraulikzylinder 35,36 vorgesehen, deren Abstützpunkte 37,38 sowie 39,40 lediglich angedeutet sind.

Am Verband 20 des Rahmens 2 greift ein weiterer 2-stufiger Hydraulikzylinder 41 an, der zum Heben und Senken des teleskopierbaren Bandförderers 1 dient und einerseits im unteren Bereich 42 des Vertikalförderers 6, andererseits am Verband 20 des Rahmens 2 abgestützt ist. Die unterschiedlichen Neigungen des Bandförderers 1 sind in Fig. 1 angedeutet. Im eingefahrenen Zustand des Bandförderers 1 sind die Teleskopschüsse 3,4 im Teleskopschuß 2 eingefahren. Der Teleskopschuß 2 kann hierbei mittels des 2-stufigen Hydraulikzylinders in eine Position gebracht werden, die nahezu der Vertikalachse 43 des Vertikalförderers 6 entspricht. Das Abschwenken des Bandförderers 1 in diese Position ist notwendig, damit er etwa im Bereich der äußeren Abmessungen 44 des Vertikalförderers 6 verbleibt und mit diesem zusammen beispielsweise in eine Schiffsluke oder dergl. Öffnung eingebracht werden kann.

Fig. 2 zeigt einen Querschnitt durch die Teleskopschüsse 2,3,4. Erkennbar sind die aus gekanteten Blechen 11,12,13 bestehenden Seitenwände, die schienenartige Profile 31,32, die oberen Laufrollen 33 sowie die unteren Laufrollen 34. Ferner angedeutet sind die etwa mittig unterhalb der Teleskopschüsse 2 bzw. 3 angeordneten Hydraulikzylinder 35 bzw. 36, die sich an nicht weiter dargestellten Bauteilen des Rahmens bzw. der Teleskopschüsse 2,3,4 abstützen. Die nicht dargestellten Schlauchanschlüsse für die Hydraulikzylinder 35,36 liegen jeweils seitlich neben den Teleskopschüssen 2,3,4.

## Patentansprüche

1. Förderanlage, die aus einem Hauptförderer und einem Endförderer, nämlich einem im Übergabebereich (5) des Hauptförderers horizontal und vertikal verschwenkbaren, einseitig gelagerten, teleskopierbaren Bandförderer (1) mit mehreren Teleskopschüssen (2,3,4) besteht,
wobei der Bandförderer (1) ein endloses um mehrere Umlenkrollen (10 - 18) geführtes Förderband (26), eine glatte, unten verstärkte Auflagefläche für den Tragabschnitt des Förderbandes (26) sowie querversteifende Verbände, an denen die als Hydraulikzylinder (23,24) ausgebildeten Antriebsaggregate angreifen, auf der vom Tragabschnitt des Förderbandes (26) abgewandten Seite der Teleskopschüsse (2,3,4) aufweist,
dadurch gekennzeichnet,
daß der Hauptförderer ein Vertikalförderer (6) ist, an den der Bandförderer (1) derart angeschlossen ist, daß der Bandförderer (1) in einer vertikalen Schwenkstellung und mit eingefahrenen Teleskopschüssen (2-4) einen kleinen spitzen Winkel zur Vertikalachse (43) des Vertikalförderers (6) hat und weitgehend innerhalb der äußeren Abmessungen des Vertikalförderers (6) liegt.

2. Förderanlage nach Anspruch 1,
dadurch gekennzeichnet,
daß die Teleskopschüsse aus abgekanteten Blechelementen (11,12,13) bestehen.

3. Förderanlage nach einem der Ansprüche 1 und 2,
dadurch gekennzeichnet,
daß die glatte, unten verstärkte Auflage aus einem Glattblech (14,15,16) mit querverlaufenden Verstärkungen (17,18,19) besteht,

4. Förderanlage nach einem der Ansprüche 1 bis 3,
dadurch gekennzeichnet,
daß das tragseitig gummierte Förderband (26) auf der Laufseite eine Textilschicht aufweist.

5. Förderanlage nach einem der Ansprüche 1 bis 4,
dadurch gekennzeichnet,
daß die Schlauchanschlüsse für die Hydraulikzylinder (35,36) der Teleskopschüsse (2 - 4) jeweils seitlich neben diesen angeordnet sind.

6. Förderanlage nach einem der Ansprüche 1 bis 5,
dadurch gekennzeichnet,
daß an dem nicht teleskopierbaren Teleskopschuß (2) mindestens ein Hebe- und Senkzylinder (41) angreift, der an Bauteilen des Vertikalförderers (6) gelagert ist.

7. Förderanlage nach Anspruch 6,
dadurch gekennzeichnet,
daß in der Arbeitshydraulik des zweistufig ausgebildeten Hebe- und Senkzylinders (41) ein Dämpfungselement vorgesehen ist.

8. Förderanlage nach Anspruch 7,
dadurch gekennzeichnet,
daß das Dämpfungselement aus einer Stickstoffblase bzw. einer Stickstoffflasche besteht.
